(19) Europäisches Patentamt
European Patent Office
Office européen des brevets

(11) **EP 3 218 113 B1**

(12) **EUROPÄISCHE PATENTSCHRIFT**

(45) Veröffentlichungstag und Bekanntmachung des Hinweises auf die Patenterteilung:
**12.12.2018 Patentblatt 2018/50**

(21) Anmeldenummer: **15797268.8**

(22) Anmeldetag: **29.10.2015**

(51) Int Cl.:
**B04B 9/10** (2006.01)   **B04B 9/12** (2006.01)
**B04B 13/00** (2006.01)   **G01M 1/18** (2006.01)
**B04B 9/14** (2006.01)   **G01M 1/22** (2006.01)

(86) Internationale Anmeldenummer:
**PCT/EP2015/075163**

(87) Internationale Veröffentlichungsnummer:
**WO 2016/074944 (19.05.2016 Gazette 2016/20)**

(54) **ZENTRIFUGE UND VERFAHREN ZUR ERFASSUNG VON UNWUCHTEN IN DER ZENTRIFUGE**

CENTRIFUGE AND METHOD FOR SENSING IMBALANCES IN THE CENTRIFUGE

CENTRIFUGEUSE ET PROCÉDÉ DE DÉTECTION DE DÉFAUTS D'ÉQUILIBRAGE DANS LA CENTRIFUGEUSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2014 DE 102014116527**

(43) Veröffentlichungstag der Anmeldung:
**20.09.2017 Patentblatt 2017/38**

(73) Patentinhaber: **Andreas Hettich GmbH & Co. KG 78532 Tuttlingen (DE)**

(72) Erfinder:
• **EBERLE, Klaus-Günter**
  **78532 Tuttlingen (DE)**
• **PABST, Christoph**
  **78532 Tuttlingen (DE)**
• **GEISELMANN, Marcellus**
  **78532 Tuttlingen (DE)**
• **FAHRNER, Sebastian**
  **78267 Aach (DE)**
• **BRENDLE, Armin**
  **78259 Mühlhausen-Ehingen (DE)**

(74) Vertreter: **Puschmann Borchert Bardehle Patentanwälte Partnerschaft mbB Bajuwarenring 21 82041 Oberhaching (DE)**

(56) Entgegenhaltungen:
EP-A2- 0 770 860      DE-A1- 19 539 633
DE-A1-102008 054 089   DE-B- 1 101 600

EP 3 218 113 B1

**Beschreibung**

Die Erfindung betrifft eine Zentrifuge gemäß der im Oberbegriff des Patentanspruches 1 angegebenen Art und ein Verfahren zur Erfassung von Unwuchten in der Zentrifuge gemäß der im Oberbegriff des Patentanspruches 14 angegebenen Art.

Aus der DE 195 39 633 A1 ist eine gattungsgemäße Zentrifuge bekannt, die einen Rotor, eine Antriebswelle, auf der der Rotor gelagert ist, einen Motor, der über die Antriebswelle den Rotor antreibt, eine Lagereinheit mit jeweils eine Federachse umfassenden Dämpfungselementen aufweist, welche eine Dreheinheit umfassend den Motor mit der Antriebswelle und den Rotor trägt. Zudem ist eine Sensoreinheit zur Erfassung der Drehzahl, ein Beschleunigungssensor zur Ermittlung von Unwuchten der Dreheinheit und eine Steuer- und Auswerteeinheit, welche die Daten der Sensoren auswertet vorgesehen. An die Auswerteeinheit ist ein Komparator angeschlossen, der Signale der Auswerteeinheit mit Referenzdaten abgleicht. Änderungen der Amplitude bedingen eine optische oder akustische Warnung oder eine Abschaltung der Zentrifuge.

Von Nachteil ist bei dieser Lösung zum einen, dass durch die verwendeten Sensoren nur die Amplituden-Änderung erfasst wird. Über Ursache und Ursprung von Unwuchten können keine oder nur bedingt Aussagen getroffen werden. Daher ist es schwierig, Maßnahmen, wie die Ausgabe von Warnmeldungen oder das Abschalten der Zentrifuge auf Grundlage der Änderung der Amplitude, differenziert zu gestalten, insbesondere unter Berücksichtigung der Drehzahl.

Aufgabe der Erfindung ist es daher, eine Zentrifuge gemäß der im Oberbegriff des Patentanspruches 1 angegebenen Art zu schaffen, die unter Vermeidung der genannten Nachteile neben dem bloßen Erkennen einer Unwucht auch Aussagen über die Ursache und den Ursprung der Unwucht ermöglicht. Ferner soll die Zentrifuge derart weitergebildet werden, dass beim Erfassen einer Unwucht differenzierte Maßnahmen in Abhängigkeit der Drehzahl ergriffen werden können.

Diese Aufgabe wird für die Zentrifuge durch die kennzeichnenden Merkmale des Patentanspruches 1 in Verbindung mit seinen Oberbegriffsmerkmalen gelöst. Für das Verfahren wird die Aufgabe durch die Merkmale des Patentanspruches 14 gelöst.

Der Erfindung liegt die Erkenntnis zugrunde, dass ein Distanzsensor wesentlich aussagekräftigere Daten über Unwuchten und deren Ursache/Ursprung liefert, wenn die Wirkachse des Distanzsensors parallel oder in einem Winkel kleiner als 90° oder im spitzen Winkel zur Drehachse verläuft, als wenn die Wirkachse des Distanzsensors senkrecht zur Drehachse verläuft. Zudem liegt der Erfindung die weitere Erkenntnis zugrunde, dass differenziertere Maßnahmen bei Auftreten von Unwuchten ergriffen werden können, wenn als Grundlage die Amplitude der von den Sensoren bereitgestellten Signale selbst dient, an Stelle der Änderung dieser Amplitude.

Nach der Erfindung weist die Zentrifuge folgende Elemente auf: ein Gehäuse; einen Rotor zur Aufnahme von Behältern mit Zentrifugiergut; eine Antriebswelle, auf der der Rotor gelagert ist; einen Motor, der über die Antriebswelle den Rotor antreibt; eine Lagereinheit mit jeweils eine Federachse umfassenden Dämpfungselementen, welche den Motor mit der Antriebswelle und den Rotor trägt; eine Sensoreinheit zur Erfassung der Drehzahl; einen Distanzsensor zur Ermittlung von Unwuchten der aus Rotor, Motor mit Antriebswelle gebildeten Dreheinheit; einen Beschleunigungssensor zur Ermittlung von Unwuchten der Dreheinheit; und eine Steuer- und Auswerteeinheit, welche die Daten der Sensoren auswertet. Dabei erfasst der Distanzsensor in einer Wirkachse Distanzänderungen. Zudem ist die Wirkachse zur Drehachse des Rotors so ausgerichtet, dass zumindest in einer Projektion auf eine zur Wirkachse parallele Ebene durch die Drehachse des Rotors sich ein Winkel zwischen der Wirkachse und der Drehachse von kleiner als 90° einschließlich 0° ergibt. Dies ist von Vorteil, da so auch eine Taumelbewegung/Abweichung der Dreheinheit aus der Mittellage erfasst werden kann und folglich aussagekräftigere Daten erhalten werden als bei einer horizontalen Erfassung der Auslenkung.

In einer bevorzugten Ausführungsform ist die Wirkachse des Distanzsensors parallel zur Federachse ausgerichtet, da die Beanspruchung der Federung ein zuverlässiger Indikator für Unwuchten und deren Stärke ist und eine parallele Anordnung des Distanzsensors zur Federachse eine genaue Messung ermöglicht.

Eine besonders genaue Messung kann erreicht werden, wenn Federachse und Wirkachse des Distanzsensors identisch sind. Dadurch wird auch die Konstruktion vereinfacht, da der Distanzsensor leicht in die Federung integriert werden kann.

Als Drehsensoren können dabei zum Beispiel magnetische oder induktive Sensoren eingesetzt werden. Als besonders gut geeignet haben sich jedoch Lichtschranken, wie Gabellichtschranken, da sie in Verbindung mit einer Segmentscheibe gleichzeitig auch zur Erfassung der Position verwendbar sind. Hierauf wird später noch genauer eingegangen.

In einer weiteren vorteilhaften Ausgestaltung sind zumindest zwei Beschleunigungssensoren zur Ermittlung von Unwuchten in einem durch drei zueinander senkrecht verlaufende Raumachsen definierten Raum vorgesehen, wobei jeder Beschleunigungssensor in einer vom anderen Beschleunigungssensor unterschiedlichen Raumachse wirksam ist. Durch die Auswertung von Daten zur Beschleunigung bezüglich mehr als nur einer Achse kann eine Unwucht noch genauer erfasst und auch Aussagen über die Ursache für die Unwucht getroffen werden, wie im Folgenden noch erläutert werden wird.

Insbesondere ist eine der Raumachsen, in der ein Beschleunigungssensor wirksam ist, die Raumachse in vertikaler Richtung. Denn während aufgrund einer erfassten horizontalen Beschleunigung, also entlang der x- und/oder y-Raumachse, nur die horizontale Auslenkung der Drehachse ermittelt werden kann, ist es aufgrund einer zusätzlich erfassten vertikalen Beschleunigung möglich, eine Taumelbewegung zu ermitteln. Des Weiteren können daraus Rückschlüsse über die Ursache und über den Ursprung der Unwucht gezogen werden, wenn beispielsweise über eine Segmentscheibe des Drehzahlsensors mit einer Absolut-Referenz (0°-Position) und über Lichtschranken die Rotation und der jeweilige Drehwinkel bezogen auf die Ausgangsstellung/Nullstellung erfasst wird. Denn über diese Daten ist dann feststellbar, wo innerhalb der Dreheinheit die Unwucht herrührt.

Gemäß einem Aspekt der Erfindung ist die Federachse so ausgerichtet, dass sie die Drehachse schneidet. Dies ist eine technisch einfach zu realisierende Anordnung der Dämpfungselemente, in die sich der Distanzsensor gut integrieren lässt.

Vorzugsweise sind auch die Wirkachse und die Federachse identisch. So kann der Distanzsensor noch leichter in die Dämpfungselemente integriert werden und direkt den Federweg der Dämpfungselemente erfassen, an Hand dessen sich dann die Abweichung des Rotors aus der Mittellage bestimmen lässt.

In einer weiteren vorteilhaften Ausgestaltung ist in der Steuer- und Auswerteeinheit eine erste Kennlinie gespeichert, welche erste Grenzwerte in Abhängigkeit der Drehzahl für die durch den Beschleunigungssensor und/oder den Distanzsensor erfassten, die Unwucht der Dreheinheit beschreibenden Amplitude bildet. Die ersten Grenzwerte sind so definiert, dass ein Überschreiten einen Handlungsbedarf signalisiert, jedoch noch keine unmittelbare Gefahr für die Sicherheit der Zentrifuge oder des Nutzers besteht. Somit dienen die ersten Grenzwerte dazu, dass bei nicht sicherheitsrelevanten Problemen innerhalb der Zentrifuge eine Warnstufe eingeleitet werden kann und weiterführende Maßnahmen vorerst vermieden werden können.

Bei einer vorteilhaften Weiterbildung der Erfindung ist in der Steuer- und Auswerteeinheit eine zweite Kennlinie gespeichert, welche zweite Grenzwerte in Abhängigkeit der Drehzahl für die durch den Beschleunigungssensor und/oder den Distanzsensor erfassten, die Unwucht der Dreheinheit beschreibenden Amplitude bildet. Dabei sind die zweiten Grenzwerte so definiert, dass ein Überschreiten Gefahr und unmittelbaren Handlungsbedarf bedeutet. Somit dienen die zweiten Grenzwerte dazu, dass bei sicherheitsrelevanten Problemen innerhalb der Zentrifuge umgehend weiterführende Maßnahmen eingeleitet werden können, die die Sicherheit der Zentrifuge und des Nutzers gewährleisten.

Günstig ist es, wenn die Steuer- und Auswerteeinheit bei Erreichen des ersten Grenzwerts eine akustische und/oder optische Signaleinheit aktiviert und/oder eine beispielsweise im Bedienteil der Zentrifuge integrierte Anzeigeeinheit ansteuert, über die die Auswertung sowie Anweisungen an den Nutzer für die zu ergreifenden Maßnahmen angezeigt werden. Dadurch erhält der Nutzer rechtzeitig ausreichend Informationen zur Behebung von Problemen, während der Betrieb der Zentrifuge vorerst aufrechterhalten werden kann.

Um die Sicherheit der Zentrifuge und des Nutzers in kritischen Situationen zu gewährleisten, ist es vorgegeben, dass die Steuer- und Auswerteeinheit bei Erreichen des zweiten Grenzwerts den Motor der Dreheinheit oder die Zentrifuge insgesamt abschaltet.

Vorteilhaft ist es, wenn die Steuer- und Auswerteeinheit auch bei Erreichen des zweiten Grenzwerts eine akustische und/oder optische Signaleinheit aktiviert und/oder eine Anzeigeeinheit ansteuert, über die die Auswertung sowie Anweisungen an den Nutzer für die zu ergreifenden Maßnahmen angezeigt werden. Dadurch werden in kritischen Situationen die Zeiten für Ursachenforschung und Problembehebung erheblich verkürzt und der Bedienkomfort verbessert.

Günstig ist es ferner, wenn in der Steuer- und Auswerteeinheit auch ein Datenlogger vorgesehen ist, der sämtliche ermittelte Daten aufzeichnet. Die Daten können dann nach dem Ende des Betriebs der Zentrifuge, beispielsweise über einen USB-Port, ausgelesen und für Wartung, Fehlerbehebung, Produkt Lifecycle-Management etc. zur Verfügung gestellt werden.

Gemäß einem Aspekt der Erfindung wird zur Erkennung von Unwuchten in einem Drehzahlbereich von kleiner als 1000rpm der Distanzsensor verwendet. Dadurch kann eine Unwucht schon bei niedrigeren Drehzahlen erkannt werden, bei denen die Beschleunigungskräfte noch zu gering sind, um von Beschleunigungssensoren zuverlässig erfasst zu werden.

Gemäß einem weiteren Aspekt der Erfindung wird zur Erkennung von Unwuchten in einem Drehzahlbereich von größer als 1000rpm der Beschleunigungssensor verwendet. Der Beschleunigungssensor ist in diesem höheren Drehzahlbereich besser geeignet als der Distanzsensor, da bei dieser Frequenz eine Messung der Beschleunigung genauere Daten liefert als eine Messung der Distanz.

Allerdings sind die Drehzahlbereiche, in denen jeweils der Distanzsensor oder der Beschleunigungssensor zuverlässigere Daten liefern, stark von der Konstruktion der Zentrifuge, insbesondere ihrer Dämpfung, abhängig. Es ist daher vorteilhaft, die Drehzahlbereiche über die Firmware konfigurierbar zu machen.

Die Aufgabe wird für das Verfahren dadurch gelöst, dass in Abhängigkeit der fortlaufenden Umdrehung Messwerte der Sensoren ermittelt werden und aus den Messwerten ein Mittelwert gebildet und mit dem entsprechenden Wert der Kennlinie verglichen wird, wobei bei einem Mittelwert oberhalb der Kennlinie weitere Maßnahmen initiiert werden, wie Abschalten des Motors der Dreheinheit, reduzieren der Drehzahl des Rotors, Aktivieren von akustischen und/oder optischen Signalen und/oder Ausgabe von Informationen über eine Anzeigeeinheit und Ähnliches.

Mittels der erfindungsgemäßen Vorrichtung und des Verfahrens soll eine mögliche Unwucht der Dreheinheit der Zentrifuge erkannt werden und die Steuer- und Auswerteeinheit vorbestimmt darauf reagieren. Darüber hinaus sollen Laufdaten gesammelt, gespeichert und zur Auswertung bereitgestellt werden, insbesondere um Rückschlüsse für die Belastung und die Lebensdauer der Zentrifuge und deren Bauteile gewinnen zu können. Hierzu werden in einem Datenlogger pro Zentrifugenlauf folgende Daten aufgezeichnet: Dauer der Zentrifugation, maximale Drehzahl, maximale Unwuchtamplitude, Drehzahl beim Auftreten der maximalen Unwuchtamplitude, Unwuchtwinkel, Mittellagenabweichung und Systemzustandsindikatoren (Flags). Zusätzlich können bei Bedarf weitere relevante Daten aufgezeichnet werden, wie beispielsweise Temperatur oder Geräusche.

Beispielsweise kann es durch die ermittelten Daten zu einem Abschalten des Motors des Rotors oder der ganzen Zentrifuge kommen, wenn die Unwucht den durch eine Kennlinie definierten Grenzwert überschreitet. Zusätzlich oder alternativ kann es Hinweise für den Service bez. dem Verschleißzustand der Dämpfungselemente, beispielsweise von bei einem Motorständer verwendeten Gummi-Metall-Elementen, geben. Möglich sind auch Hinweise für den Benutzer, durch welches Behältnis des Rotors die Unwucht hervorgerufen wird evtl. durch falsche Beladung. Zudem kann auch eine Hilfestellung im Servicefall zum Auswuchten des Rotors über eine Anzeigevorrichtung ausgegeben werden.

Der Drehsensor zur Erfassung der Rotation kann dabei wie folgt ausgebildet sein: An der Motorachse ist eine Segmentscheibe mit 30 in gleichem Abstand angeordnete Aussparungen sowie eine einzelne Nocke in der 0°-Position (Absolut-Referenz) befestigt. Über eine Lichtschranke, beispielsweise eine Gabellichtschranke, wird der aktuelle Drehwinkel unter Einbeziehung der Flankenwechsel in 6°-Schritten erfasst, 60 mal 6° sind 360°. Über eine zweite Gabellichtschranke, die so angeordnet ist, dass sie ein zum Signal der ersten Gabellichtschranke um 90° versetztes Signal liefert, wird die Drehrichtung erfasst. Über einen Reflexlichttaster wird die 0°-Position erfasst.

Zur Erfassung der zur Unwucht-Erkennung relevanten Daten werden, wie oben ausgeführt wurde, vier Sensoren eingesetzt, nämlich der Drehsensor, der Beschleunigungssensor für die Erfassung der Beschleunigung in einer ersten Raumachse, der Beschleunigungssensor für die Erfassung in der zweiten Raumachse, der Distanzsensor. Zusätzlich kann auch ein weiterer Beschleunigungssensor für die Erfassung der Beschleunigung der dritten Raumachse vorgesehen sein.

Die drei Beschleunigungssensoren sind insbesondere als ein Dreiachsen-Beschleunigungssensor ausgebildet. Somit sind alle drei Beschleunigungssensoren in einer Baueinheit zusammengefasst. Diese ist dann vorzugsweise direkt auf einem Elektronikboard montiert, das im Bereich eines unteren Motorlagers nahe der Welle befestigt ist. Alternativ kann die Baueinheit auch im Rotor angeordnet werden.

Der Distanzsensor kann als induktiver Näherungssensor ausgebildet sein. Der Messbereich umfasst insbesondere Änderungen von 4 mm, vorzugsweise bis zu 6 mm. Es werden dabei relative Abstandsänderungen zwischen einer Trägerplatte bzw. einer zweiten elastischen Lasche und einer Fixierplatte bzw. einer dritten elastischen Lasche des Motorständers erzeugt. Die Justage kann mittels einer einfachen mechanischen Lehre erfolgen und erfordert keine besondere Präzision.

Die vertikale Schwingung der Trägerplatte der Zentrifuge wird zwar auch von der Konstruktion der Zentrifuge beeinflusst. Erfahrungsgemäß zeigt sie aber bei Unwucht ein charakteristisches Maximum bei ca. 150-200 rpm. Dieses Maximum kann nur mit dem Distanzsensor erfasst werden, da bei diesen Drehzahlen die Beschleunigungskräfte für den Messbereich des Beschleunigungssensors noch zu gering sind. Da eine Unwucht möglichst früh, also bei niedrigen Drehzahlen erkannt werden soll, muss hierzu der Distanzsensor eingesetzt werden. Bei Drehzahlen oberhalb von ca. 1000 rpm eignet sich der Beschleunigungssensor besser zur eindeutigen Erkennung einer Unwucht. Eine Messung der Abweichung aus der Mittellage, nämlich ein Aufrichten des Rotors bei hohen Drehzahlen, ist wiederum nur mit dem Distanzsensor möglich.

Es ist zudem denkbar, in jeder Federachse, beispielsweise oberhalb eines Dämpfungselements, jeweils einen Distanzsensor zur Datenerfassung vorzusehen. Anhand der erfassten Daten kann eine falsche/unsymmetrische Beladung, die zu einer erhöhten Unwucht während der Zentrifugation führen würde, von der Auswerteeinheit unmittelbar vor Inbetriebnahme der Zentrifuge erkannt werden. Über eine Anzeigeeinheit wird der Benutzer dann vor dem Start gewarnt oder die Steuereinheit kann einen Start von vornherein verhindern.

Die Berechnung des für die Unwucht-Bewertung verwendeten Wertes erfolgt insbesondere wie folgt:
Die Steuer- und Auswerteeinheit erfasst kontinuierlich mit einer Frequenz von 9,6 kHz auf vier unterschiedlichen Kanälen folgende Messwerte: Mittels des Distanzsensors die Distanz zwischen Trägerplatte und Fixierplatte, mittels des Beschleunigungssensors die Beschleunigung längs der x-Achse, mittels des Beschleunigungssensors die Beschleunigung längs der y-Achse und mittels des Beschleunigungssensors die Beschleunigung längs der z-Achse. Es sind somit vier Sensoren im Einsatz, der Distanzsensor, der Beschleunigungssensor für die x-Achse, der Beschleunigungssensor für die y-Achse, der Beschleunigungssensor für die z-Achse.

Dadurch, dass die Messwerte auf vier unterschiedlichen Kanälen übertragen werden, stehen diese gleichzeitig zur Auswertung der Steuer- und Auswerteeinheit zur Verfügung. Aus den mit 9,6 kHz erfassten Messwerten werden in Abhängigkeit zur Drehzahl Mittelwerte gebildet.

Wie ausgeführt wurde, weist der Drehsensor Aussparungen in einer Segmentscheibe auf, welche mit einer Lichtschranke zusammenwirken. Mit Beginn der Aussparung wird ein Signal solange erzeugt, bis der Lichtstrahl in Folge der Drehung der Segmentscheibe das Ende der Aussparung erreicht hat. In dieser Zeit trifft die Lichtschranke auf den zugeordneten Lichtsensor und generiert das Signal. Zu Beginn und zum Ende des Signals entstehen Signalflanken. Die Signalflanke wechselt somit zu Beginn und am Ende des Signals. Bei einem Wechsel der Signalflanke bei Drehung des Segmentrads wird von der Steuer- und Auswerteeinheit ein Mittelwert gebildet. Dieser Mittelwert basiert auf allen Messwerten eines Sensors, die seit dem letzten Flankenwechsel von diesem Sensor erfasst wurden. Die 60 Messpunkte ergeben die Signalkurve, die einen sinusähnlichen Verlauf aufweist. Je nach Sensor ergeben sich unterschiedliche Amplituden und Phasenwinkel.

Pro Umdrehung ergibt sich pro Sensor eine Signalkurve aus den 60 Messpunkten. Von dieser Signalkurve wird für jeden Sensor der Effektivwert des Signales (RMS) und der DC-Offset ermittelt. Die Signalkurve wird um den DC-Offset, der sich aus dem Mittelwert der 60 Messpunkte ergibt, korrigiert, um den reinen Wechselsignalanteil zu erhalten. Dieser ist somit symmetrisch zu Null.

Die Effektivwerte der vier Sensoren werden in der Steuer- und Auswerteeinheit gewichtet summiert, d.h. jeder Effektivwert wird mit einem konfigurierbaren Faktor multipliziert und die Ergebnisse addiert. Das Ergebnis wird im Folgenden als Sensorensumme bezeichnet. Diese Sensorensumme wird primär für eine nachfolgend erläuterte Bewertung der Unwucht durch einen Vergleich der ermittelten Werte mit konfigurierbaren Grenzwerten verwendet. Zudem ist die Sensorensumme auch für die Ermittlung des Unwucht-Winkels notwendig.

Der Unwucht-Winkel wird wie folgt ermittelt: Der Winkel, an dem der maximale Ausschlag der Sensorensumme gemessen wird, entspricht nicht dem Winkel, an dem sich die maximale Unwucht tatsächlich befindet, da verschiedene Einflüsse, wie z.B. Drehzahl, Gewichtung der Sensoren, Höhe der Unwucht, u. ä., eine Winkelverschiebung des maximalen Ausschlags verursachen. Aus diesem Grund wird der Winkel der Unwucht und somit letztlich die Feststellung, welcher Behälter des Rotors betroffen ist, bei einer niedrigen Drehzahl und ausschließlich mit dem Distanzsensor ermittelt.

Beispielsweise wird für diese exakte Bestimmung der Position die Unwucht bei einer konstanten Drehzahl, z.B. 190rpm, mit dem Distanzsensor erfasst und dabei der Drehwinkel bezogen auf einen Nullpunkt des Rotors - 0°-Position - gemessen, an dem das Sinussignal des Distanzsensors sein Maximum hat.

Messungen zeigen, dass die Phasen des Sinussignals des Distanzsensors vom Gewicht der Unwucht abhängig sind. Beispielsweise ergibt sich zwischen 2,5g und 60g Unwucht eine Verschiebung von ca. 70° des Drehwinkels. Dieser Einfluss wird dann in der Auswerteeinheit über eine logarithmische Korrekturkurve korrigiert. Die Formel der Kurve lautet:

$$\phi(\text{Unwucht}) = \phi(\text{DistanzsensorSinusMax}) \times A1 \times \ln(\text{UnwuchtAmplitude}) + A2$$

Der Korrekturfaktor A1 (einheitenlos) bestimmt die Verstärkung der logarithmischen Kurven der Unwuchtamplitude, der Faktor A2 (in °) bestimmt die Lage dieser Kurve.

Die entsprechend korrigierten Daten geben die exakte Position der Unwucht im Rotor an und somit die Position des Behältnisses im Rotor, das die Unwucht verursacht. Die Auswerteeinheit teilt dem Benutzer diese Position über die Anzeigeeinheit mit, so dass der Benutzer geeignete Maßnahmen ergreifen kann.

Ein weiterer Grund für die Verwendung des Distanzsensors zur Ermittlung des Unwucht-Winkels ist ferner, dass beim Abbremsen/Auslaufen die niedrige Drehzahl zwangsläufig durchlaufen wird. Der Unwucht-Winkel wird erst bei stehender Maschine für den Bediener relevant, um das Behältnis, welches als Unwucht verursachend ermittelt wurde, überprüfen zu können. Des Weiteren kann auf eine aufwändige Korrektur (Modellierung) der veränderlichen Einflüsse, wie Drehzahl, Unwucht-Gewicht, auf den Winkel verzichtet werden, da diese bei niedrigen Drehzahlen kaum ins Gewicht fallen.

Die Ermittlung/Auswertung der Mittellage-Abweichung des Rotors kann wie folgt durchgeführt werden, wobei zunächst zu beachten ist, dass unabhängig von der Unwucht sich die Rotationsachse mit steigender Drehzahl durch Kreiselkräfte lotrecht ausrichtet. Hierdurch verschiebt sich die mittlere Lage, um die die Masse der Dreheinheit schwingt. Diese Verschiebung der mittleren Lage kann mit dem Distanzsensor wie folgt erfasst werden.

Die Mittellage entspricht dem Mittelwert der 60 winkelabhängig berechneten Messpunkte des Distanzsensors innerhalb einer Umdrehung des Rotors, siehe oben im Zusammenhang mit der Berechnung des für die Unwucht-Bewertung verwendeten Wertes. Sie entspricht der absoluten Lage der Rotationsschwingung auf der Ordinate. Der Wert der Mittellage wird an zwei festgelegten Drehzahlwerten gespeichert, z. B. 500 rpm und 2.500 rpm. Die Differenz der Mittellagewerte an diesen Schwellen wird bewertet. Der Absolutwert der Differenz wird mit einer festzulegenden Maximalschwelle verglichen. Wenn die Maximalschwelle, ein erster Grenzwert überschritten wird, wird eine Warnung angezeigt, aber die Maschine nicht abgeschaltet.

Ursachen für eine zu hohe Abweichung können sein:

-   Unsachgemäße Ausrichtung der Maschine, z. B. nicht waagrecht ausgerichtet.
-   Defekt(e) an den Dämpfungselementen, z.B. Gummi-Metall-Elementen des Rotorlagers.

Vorzugsweise kann die Erkennung der maximal zulässigen Unwucht wie folgt erfolgen.

Die Schwelle zur Erkennung einer unzulässigen Unwucht und folglich die Abschaltung der Maschine wird über sogenannte Abschaltfenster realisiert. Jedes Abschaltfenster besteht aus einem Datensatz, in dem konfiguriert ist, unter welchen Bedingungen die Maschine die Voraussetzungen erfüllt, damit das Abschaltfenster aktiv wird, d.h. der zugehörige Schwellwert geprüft und die Maschine ggf. abgeschaltet wird. Ein Abschaltfenster wird aktiv, wenn die aktuelle Drehzahl innerhalb der konfigurierten Drehzahlgrenzen liegt, und die aktuelle Beschleunigung innerhalb der konfigurierten Beschleunigungsgrenzen liegt, und diese Bedingungen permanent für eine konfigurierte Entprellzeit erfüllt sind, also dem vorgegebenen Zeitraum, in dem das Signal mindestens an einem Eingang der Steuer- und Auswerteeinheit anliegen muss, damit es erkannt wird und von der Steuer- und Auswerteeinheit weiterverarbeitet werden kann.

Vorzugsweise werden über eine Eingabe von Datensätzen einzelne Verfahrensschritte der Zentrifuge - z. B. Sedimentation, Separation - definiert, für die jeweils eine spezifische Behandlung beim Erkennen einer Unwucht festgelegt wird. Beispielsweise wird zwischen einem Sedimentationsschritt und einem Separationsschritt unterschieden. Die Unterscheidung erfolgt über die Festlegung von Drehzahlschwellen in unterschiedlichen Abschaltfenstern. Beispielsweise können dem Sedimentationsschritt Drehzahlen von über 1.000 rpm zugeordnet sein und dem Separationsschritt Drehzahlen von kleiner 1.000 rpm. Die Abschaltfenster sind dabei so konfiguriert, dass während der Separation keine Abschaltung durch die Steuer- und Auswerteeinheit erfolgt, um die Produktivität zu erhöhen. Der zusätzliche, in jeder Zentrifuge vorgesehene Unwucht-Endschalter bleibt davon unberührt aber jederzeit aktiv.

Bei Plateauphasen, d. h. wenn bei einer konstanten Drehzahl nicht beschleunigt wird, muss die Steuer- und Auswerteeinheit nicht erkennen können, ob ein Verfahrensschritt durch einen Beschleunigungs- oder Abbremsvorgang erreicht wurde, d.h. welcher Produktionsschritt gerade ausgeführt wird.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:

Fig. 1       eine perspektivische Ansicht der Zentrifuge nach der Erfindung, mit Trägerelement und ohne Gehäuse, wobei die Vorderseite der Zentrifuge vom Betrachter aus nach rechts gerichtet ist;

Fig. 1a      eine Ansicht der Rückseite der in der Fig. 1 gezeigten Zentrifuge;

Fig. 1b      eine Ansicht der linken Seite der in der Fig. 1 gezeigten Zentrifuge;

Fig. 2       eine schematische Teilansicht des in den Fig. 1, 1a und 1b dargestellten Distanzsensors in montiertem Zustand;

Fig. 3       eine schematische Teilansicht der in den Fig. 1, 1a und 1b dargestellten Steuer- und Auswerteeinheit, und

Fig. 4       ein Ablaufdiagramm zur Unwuchterkennung bei der Zentrifuge nach der Erfindung.

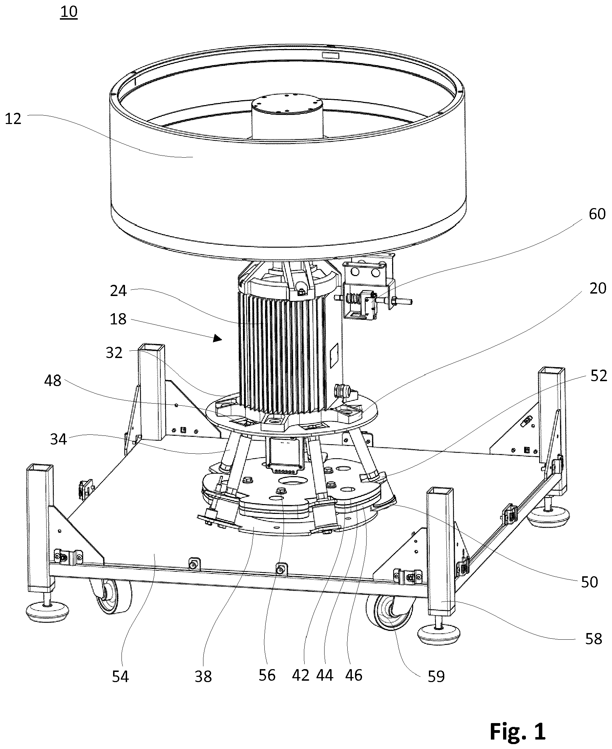

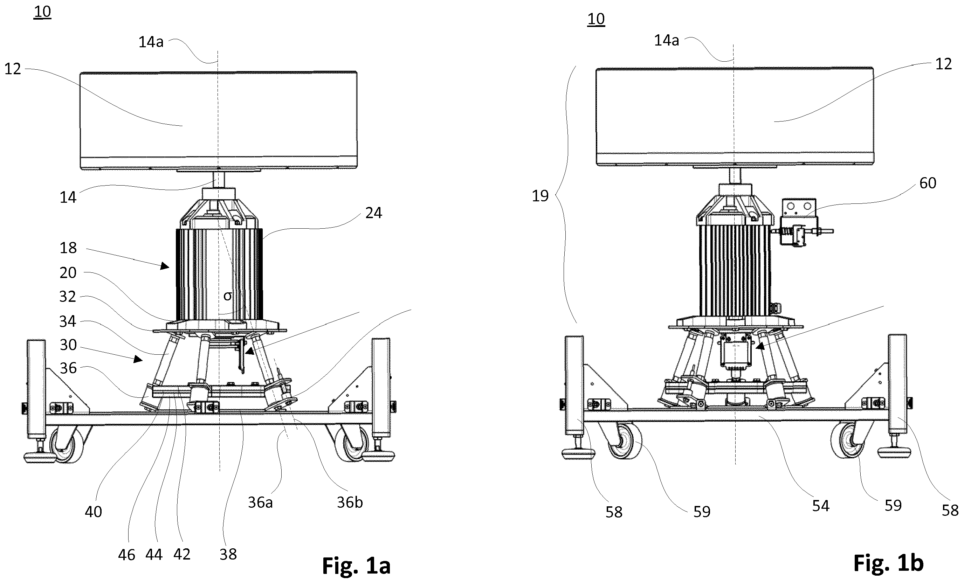

In den Fig. 1, 1a und 1b ist eine erfindungsgemäße Laborzentrifuge 10 in einer perspektivischen Ansicht, siehe Fig. 1, einer rückwärtigen Ansicht, siehe Fig. 1a, und einer Ansicht von ihrer linken Seite, siehe Fig. 1b, dargestellt. Zur besseren Erkennbarkeit der erfindungswesentlichen Elemente wird in diesen Figuren auf die Darstellung eines Zentrifugengehäuses verzichtet.

Entlang einer Längs- und Drehachse 14a eines Motors 18, welche zugleich die Drehachse der Zentrifuge 10 ist, befindet sich am oberen Ende ein Rotor 12, der Behälter mit Zentrifugiergut aufnimmt. Der Rotor 12 ist auf einer Motorwelle 14 gelagert, die von dem darunterliegenden Motor 18 angetrieben wird. Der Motor 18 ist von einem Motorgehäuse 24 umgeben. Die Motorwelle 14 ist in bekannter Weise drehfest mit dem Rotor 12 verbunden, beispielsweise über ein hier nicht dargestelltes Vielnutprofil.

Auf der vom Rotor 12 abgewandten Seite des Motors 18 ist das Motorgehäuse 24 mit gleichmäßig voneinander beabstandeten Befestigungsfüßen 20 versehen, über die der Motor 18 fest mit einer oberen Trägerplatte 32 einer Lagereinheit 30 verbunden ist. Die Lagereinheit 30 dient der Lagerung des Motors 18 sowie der Dämpfung von Kräften, die von der Drehung des Rotors 12 herrühren.

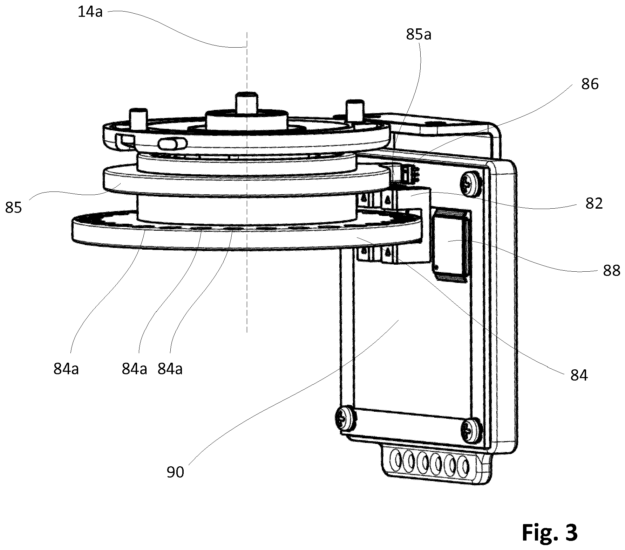

Benachbart zum Motorgehäuse 24 ist ein mechanischer Endschalter 60 angeordnet, der durch eine herkömmliche Schraubverbindung mit dem nicht dargestellten Zentrifugengehäuse fest verbunden ist. Dabei ist der mechanische Endschalter 60 so vom Motorgehäuse 24 beabstandet, dass im störungsfreien Betrieb bei Taumelbewegung des Rotors 12 innerhalb der üblichen Toleranzgrenzen kein Kontakt zwischen dem mechanischen Endschalter 60 und dem Motorgehäuse 24 entsteht. Im Falle einer über die Lagereinheit 30 nicht mehr ausgleichbaren Taumelbewegung des Rotors 12 und einer dadurch bedingten, außerhalb der Toleranzgrenzen liegenden, horizontalen Verschiebung der Drehachse 14a und folglich des Motors 18, entsteht ein Kontakt zwischen dem mechanischen Endschalter 60 und dem Motorgehäuse 24. Dieser Kontakt führt zu einer Notabschaltung der Zentrifuge 10 über eine in Fig. 3 beschriebene Steuer- und Auswerteeinheit 90.

Auf der vom Motor 18 abgewandten Seite der Lagereinheit 30 befindet sich eine untere Trägerplatte 38. Auf der unteren Trägerplatte 38 sind als Dämpfungselemente schräg angestellte Gummi-Metall-Elemente 36 angebracht, die wiederum über im selben Winkel angestellte Streben 34 mit der oberen Trägerplatte 32 fest verbunden sind. Bezogen auf die Längsachse 14a sind als Anstellwinkel σ für die Gummi-Metall-Elemente 36 und die damit verbundenen Streben 34 prinzipiell Winkel zwischen 10° und 42° vorteilhaft, da die Kräfte, die auf Unwucht basieren, bei Rotation des Rotors 12 im Bereich dieser Winkel wirken. Für die vorliegende Ausführungsform der Zentrifuge 10 hat sich ein Anstellwinkel σ von 21° als besonders geeignet erwiesen.

Ferner ist es denkbar, die Lagereinheit 30 beispielsweise ohne die Streben 34 auszuführen und die Gummi-Metall-Elemente 36 direkt mit der oberen Trägerplatte 32 zu verbinden. Es hat sich aber gezeigt, dass durch den vergrößerten Durchmesser an der Unterseite der Lagereinheit 30 eine höhere Stabilität und damit ein verbesserter Dämpfungseffekt erzielt werden. Als Dämpfungselemente kommen im Übrigen beispielsweise auch Federlager, Magnetlager oder hydraulische Lager in Frage. Ein besonders günstiges Preis-/Leistungsverhältnis weisen jedoch die für diese Zentrifuge 10 gewählten Gummi-Metall-Elemente 36 auf.

Schließlich ist zwischen der oberen Trägerplatte 32 und der unteren Trägerplatte 38 ein Masseelement 40 vorgesehen, das mit den Streben 34 und den Gummi-Metall-Elementen 36 fest verbunden ist. Durch die Anstellung der Gummi-Metall-Elemente 36 und durch die Beabstandung der Gummi-Metall-Elemente 36 vom Motor 18 mittels der Streben 34 ist zwar bereits eine gute Dämpfungswirkung erreicht, so dass auf das Masseelement 40 auch verzichtet werden könnte. Durch das Hinzufügen eines Masseelements 40 wird die Dämpfungswirkung jedoch noch weiter deutlich verbessert.

Über die untere Trägerplatte 38 ist die Zentrifuge 10 drehfest auf einem Trägerelement 54 angeordnet. Auf der oberen Trägerplatte 32 ist zwischen jedem Paar von Befestigungsfüßen 20 eine erste elastische Lasche 48 erkennbar, die jeweils das der oberen Trägerplatte 32 zugewandte Ende einer Strebe 34 aufnimmt und die jeweilige Strebe 34 federnd mit der oberen Trägerplatte 32 verbindet. Die ersten elastischen Laschen 48 können auch separate Bauteile sein, die mit der oberen Träger-platte 32 beispielsweise verschweißt werden. Es erhöht jedoch die Stabilität der Lagereinheit 30, wenn die ersten elastischen Laschen 48, wie in dem gezeigten Ausführungsbeispiel, einstückig mit der oberen Trägerplatte 32 und aus demselben Material wie die obere Trägerplatte 32 gebildet sind, beispielsweise durch ein Stanz- und Biegeverfahren.

Die untere Begrenzung des Lagerelements 30 wird von einer unteren Trägerplatte 38 gebildet, die über zweite elastische Laschen 50 mit den Gummi-Metall-Elementen 36 verbunden ist. Zwischen der unteren Trägerplatte 38 und der oberen Trägerplatte 32 befindet sich das Masseelement 40. Das Masseelement 40 besteht aus drei übereinanderliegenden Platten. In der Mitte ist eine Fixierplatte 44 angeordnet, die über dritte elastische Laschen 52 mit den Gummi-Metall-Elementen 36 und mit den Streben 34 federnd verbunden ist. Oberhalb und unterhalb der Fixierplatte 44 sind eine scheibenförmige obere Masseplatte 42 und eine scheibenförmige untere Masseplatte 46 angeordnet, die beide mit der Fixierplatte 44 fest verbunden sind. Die zweiten elastischen Laschen 50 und die dritten elastischen Laschen 52 sind in diesem Ausführungsbeispiel analog zu den ersten elastischen Laschen 48 einstückig mit der jeweils zugeordneten unteren Trägerplatte 38 bzw. der Fixierplatte 44 und aus demselben Material wie die jeweilige zugeordnete Platte gebildet.

Die Lagereinheit ist über die untere Trägerplatte 38 durch Schraubverbindungen 56 fest mit dem Trägerelement 54 verbunden. Das Trägerelement 54 weist an seinen vier Ecken Standbeine 58 und den Standbeinen benachbart angeordnete Rollen 59 auf, mit denen die Zentrifuge 10 auf dem Untergrund steht.

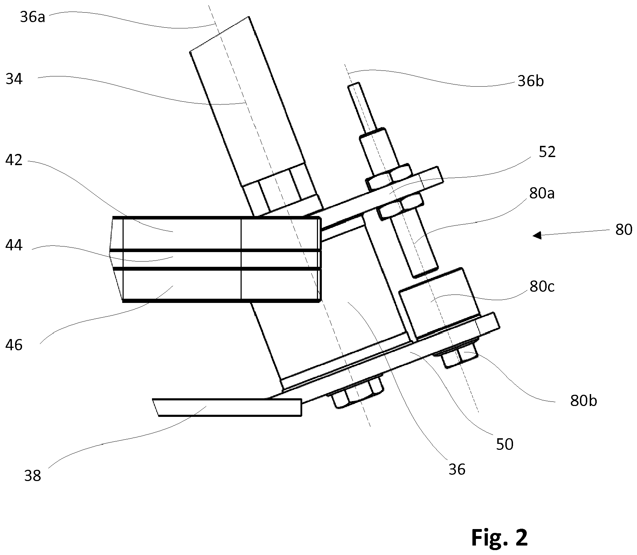

Fig. 2 zeigt die Anordnung des Distanzsensors 80 im Detail. Der Distanzsensor 80 ist als induktiver Sensor ausgeführt und umfasst einen Sensorkopf 80a, in den eine aus Gründen der Übersicht nicht gezeigte Induktionsspule eingebracht ist. Der Sensorkopf 80a ist in einer dritten elastischen Lasche 52 eingebracht und weist eine Wirkachse 36b auf, die parallel zur Federachse 36a verläuft. Auf der der dritten elastischen Lasche 52 zugeordneten zweiten elastischen Lasche 50 ist ein Metallkopf 80c angeordnet, der mit dem Sensorkopf 80a zusammenwirkt. Der Metallkopf 80c ist mit der zweiten elastischen Lasche 50 verschraubt. Hierfür weist der Metallkopf 80c einen Gewindestift auf, der in eine Bohrung der zweiten elastischen Lasche 50 eingreift und mit einer auf den Gewindestift aufgebrachten Mutter 80b gesichert ist. Wenn aufgrund einer Unwucht vertikale Schwingungen im Rotors 12 entstehen, die über die Streben 34 zur Dämpfung in die Gummi-Metall-Elemente 36 geleitet werden, verändert sich die Längserstreckung der Gummi-Metall-Elemente 36 entlang der Federachse 36a. Dadurch verändert sich der Abstand zwischen der dritten elastischen Lasche 52 und der ihr zugeordneten zweiten elastischen Lasche 50. Die Veränderungen des Abstands sind durch den Distanzsensor 80 exakt messbar, und an Hand der Messdaten ist eine Berechnung der Unwucht, insbesondere bei niedrigen Umdrehungszahlen der Zentrifuge bis 1000rpm, möglich.

Fig. 3 zeigt eine schematische Ansicht der Steuer- und Auswerteeinheit 90. Wie aus den Fig. 1, 1a und 1b ersichtlich ist die Steuer- und Auswerteeinheit 90 in einer Baugruppe mit einer Segmentscheibe 84, einer Gabellichtschranke 82, einem Reflex-Lichttaster 86 und einem Beschleunigungssensor 88 unterhalb des Motors 18 angeordnet. Der in Fig. 2 dargestellte Distanzsensor 80, die Gabellichtschranke 82, der Reflex-Lichttaster 86 und der Beschleunigungssensor 88 sowie ein nicht dargestelltes am Zentrifugengehäuse angeordnetes Bedienteil mit einer integrierten Anzeigeeinheit sind mit der Steuer- und Auswerteeinheit 90 verbunden. Weitere Distanzsensoren 88 können im Bereich der Streben 34 angeordnet sein, beispielsweise an der ersten oder zweiten Lasche 50, 52. Ferner ist in der Steuereinheit 90 ein nicht dargestellter elektrischer Schalter zur Abschaltung der Zentrifuge 10 im Störungsfall vorgesehen. Der elektrische Schalter ist als Öffnerkontakt ausgebildet und mit dem ebenfalls als Öffnerkontakt ausgebildeten mechanischen Endschalter 60 in Reihe geschaltet, so dass bei Öffnen eines der beiden Schalter eine Abschaltung der Zentrifuge 10 erfolgt.

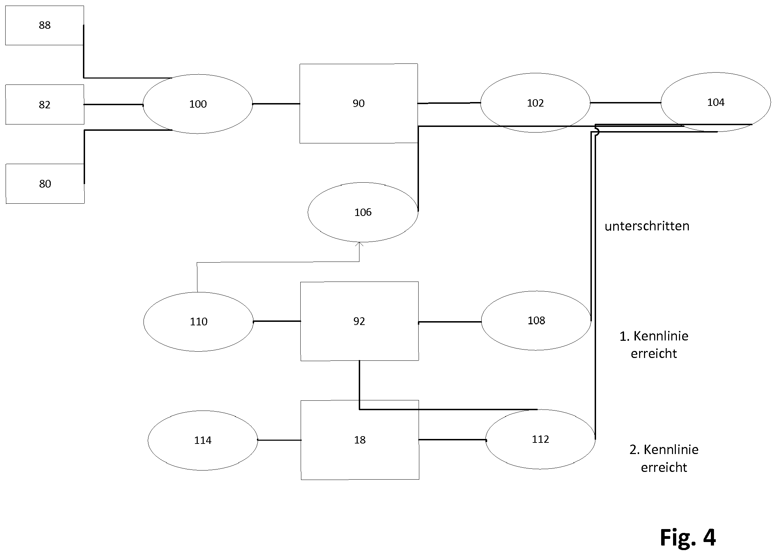

Die Segmentscheibe 84 ist konzentrisch drehfest mit der in Fig. 4 nicht gezeigten Motorwelle 14 verbunden, so dass sie während des Betriebs der Zentrifuge 10 um die Drehachse 14a rotiert. Auf der Segmentscheibe 84 sind umlaufend in gleichmäßigen Abständen zueinander 30 Ausnehmungen 84a vorgesehen. Durch die an der Steuer- und Auswerteeinheit 90 angeordnete, die Segmentscheibe 84 bereichsweise umgreifende Gabellichtschranke 82 kann an Hand der Ausnehmungen 84a die Drehzahl der Zentrifuge 10 bestimmt werden. Des Weiteren ist eine Scheibe 85 oberhalb der Segmentscheibe 84 vorgesehen, die eine Nocke 85a aufweist. Die Nocke 85a dient als Absolut-Referenz für eine 0°-Position, zu deren Erfassung ein Lichtreflextaster 86 vorgesehen ist. Aufgrund der Erfassung der 0°-Position durch den Lichtreflextaster 86 und der Erfassung der Ausnehmungen 84a durch die Gabellichtschranke 82 können in der Steuer- und Auswerteeinheit 90 auch der Drehwinkel und die Drehrichtung bestimmt werden. Der benachbart zur Gabellichtschranke 82 angeordnete Beschleunigungssensor 88 ist in drei Raumachsen x, y und z aktiv und dient der Erfassung von Unwuchten insbesondere bei Drehzahlen >1000rpm.

In Fig. 4 wird schematisch ein Verfahren zum Erfassen einer Unwucht in einer erfindungsgemäßen Zentrifuge 10 dargestellt.

Von Distanzsensor 80, Gabellichtschranke 82 in Verbindung mit dem Reflex-Lichttaster 86 und Beschleunigungssensor 88 werden der Steuer- und Auswerteeinheit 90 Messdaten zum Erfassen von Unwuchten bereitgestellt 100. Diese Messdaten werden in der Steuer- und Auswerteeinheit 90 ausgewertet 102 und mit zwei vorgegebenen Kennlinien abgeglichen 104.

Liegen die Messdaten unterhalb der ersten Kennlinie, wird die Unwucht als unerheblich eingestuft und der Betrieb ohne weitere Behandlung fortgesetzt 106. Überschreiten die Messdaten die erste Kennlinie, liegen aber noch unterhalb der zweiten Kennlinie, wird eine Anzeigeeinheit angesteuert 108 und ein entsprechender Hinweis bzw. eine Warnung ausgegeben 110. Der Betrieb wird jedoch fortgesetzt 106. Wenn die Messdaten hingegen auch die zweite Kennlinie überschreiten, werden zugleich die Anzeigeeinheit und der Motor 18 angesteuert. An der Anzeigeeinheit wird eine Warnung ausgegeben 110, und der Motor 18 wird abgeschaltet 114.

**Bezugszeichenliste**

| | |
|---|---|
| 10 | Zentrifuge |
| 12 | Rotor |
| 14 | Motorwelle |
| 14a | Drehachse |
| 18 | Motor |
| 19 | Dreheinheit |
| 20 | Befestigungsfüße |
| 24 | Motorgehäuse |
| 30 | Lagereinheit |
| 32 | obere Trägerplatte |
| 34 | Streben |
| 36 | Gummi-Metall-Elemente |
| 36a | Federachse |
| 36b | Wirkachse |
| 38 | untere Trägerplatte |

| 40 | Masseelement |
|---|---|
| 42 | obere Masseplatte |
| 44 | Fixierplatte |
| 46 | untere Masseplatte |
| 48 | erste elastische Laschen |
| 50 | zweite elastische Laschen |
| 52 | dritte elastische Laschen |
| 54 | Trägerelement |
| 56 | Schraubverbindungen |
| 58 | Standbeine |
| 59 | Rollen |
| 60 | mechanischer Entschalter |
| 80 | Distanzsensor |
| 80a | Sensorkopf |
| 80b | Mutter |
| 80c | Metallkopf |
| 82 | Gabellichtschranke |
| 84 | Segmentscheibe |
| 84a | Ausnehmungen |
| 84b | Nocke |
| 86 | Reflex-Lichttaster |
| 88 | Beschleunigungssensor |
| 90 | Steuer- und Auswerteeinheit |
| σ | Anstellwinkel |
| 100 | Bereitstellung von Messdaten |
| 102 | Auswertung von Messdaten |
| 104 | Abgleichen von Messdaten mit vorgegebenen Kennlinien |
| 106 | Betrieb fortsetzen |
| 108 | Anzeigeeinheit ansteuern |
| 110 | Warnung ausgeben |
| 112 | Anzeigeeinheit und Motor ansteuern |
| 114 | Motor abschalten |

**Patentansprüche**

1. Zentrifuge (10) mit einem Rotor (12), einer Antriebswelle (14), auf der der Rotor (12) gelagert ist, einem Motor (18), der über die Antriebswelle (14) den Rotor (12) antreibt, einer Lagereinheit (30) mit jeweils eine Federachse (36a) umfassenden Dämpfungselementen (36), welche eine Dreheinheit (19) umfassend den Motor (18) mit der Antriebswelle (14) und den Rotor (12) trägt, einer Sensoreinheit (82, 84) zur Erfassung der Drehzahl, einem Beschleunigungssensor (88) zur Ermittlung von Unwuchten der Dreheinheit (19), eine Steuer- und Auswerteeinheit (90), welche die Daten der Sensoren (80, 82, 88) auswertet, **dadurch gekennzeichnet, dass** ein Distanzsensor (80) zur Ermittlung von Unwuchten der Dreheinheit (19), welche um eine Drehachse (14a) rotiert, vorgesehen ist, wobei der Distanzsensor (80) in einer Wirkachse (36b) Distanzänderungen erfasst, die Wirkachse (36b) zur Drehachse (14a) so ausgerichtet ist, dass zumindest in einer Projektion auf eine zur Wirkachse (36b) parallelen Ebene durch die Drehachse (14a) sich ein Winkel zwischen der Wirkachse (36b) und der Drehachse (14a) von kleiner als 90° einschließlich 0° ergibt.

2. Zentrifuge nach Anspruch 1, **dadurch gekennzeichnet, dass** die Wirkachse (36b) des Distanzsensors (80) parallel zur Federachse (36a) ausgerichtet ist.

3. Zentrifuge nach Anspruch 1 oder 2, **dadurch gekennzeichnet, dass** zumindest zwei Beschleunigungssensoren (88) zur Ermittlung von Unwuchten in einem durch drei zueinander senkrecht verlaufende Raumachsen (x, y, z) definierten Raum vorgesehen sind, wobei jeder Beschleunigungssensor (88) in einer vom anderen Beschleunigungssensor (88) unterschiedlichen Raumachsen (x, y, z) wirksam ist.

4. Zentrifuge nach Anspruch 3, **dadurch gekennzeichnet, dass** eine der Raumachsen (x, y, z), in der ein Beschleunigungssensor wirksam ist, die Raumachse in vertikaler Richtung (z) ist.

5. Zentrifuge nach einem der vorangehenden Ansprüche, **dadurch gekennzeichnet, dass** die Federachse (36a) so ausgerichtet ist, dass sie die Drehachse (14a) schneidet.

6. Zentrifuge nach einem der vorangehenden Ansprüche, **dadurch gekennzeichnet, dass** die Wirkachse (36b) und die Federachse (36a) identisch sind.

7. Zentrifuge nach einem der vorangehenden Ansprüche, **dadurch gekennzeichnet, dass** in der Steuer- und Auswerteeinheit (90) eine erste Kennlinie gespeichert ist, welche erste Grenzwerte in Abhängigkeit der Drehzahl für die durch den Beschleunigungssensor (88) und/oder den Distanzsensor (80) erfassten, die Unwucht der Dreheinheit (19) beschreibenden Amplitude bildet, vorzugsweise dass in der Steuer- und Auswerteeinheit (90) eine zweite Kennlinie gespeichert ist, welche zweite Grenzwerte in Abhängigkeit der Drehzahl für die durch den Beschleunigungssensor (88) und/oder den Distanzsensor (80) erfassten, die Unwucht der Dreheinheit (19) beschreibenden Amplitude bildet.

8. Zentrifuge nach Anspruch 7, **dadurch gekennzeichnet, dass** die Steuer- und Auswerteeinheit bei Erreichen des ersten Grenzwerts eine akustische und/oder optische Signaleinheit aktiviert und/oder eine Anzeigeeinheit ansteuert, über die die Auswertung sowie Anweisungen an den Nutzer für die zu ergreifenden Maßnahmen angezeigt werden.

9. Zentrifuge nach Anspruch 7 oder 8, **dadurch gekennzeichnet, dass** die Steuer- und Auswerteeinheit bei Erreichen des zweiten Grenzwerts den Motor der Dreheinheit und/oder die Zentrifuge abschaltet, insbesondere die Steuer- und Auswerteeinheit eine akustische und/oder optische Signaleinheit aktiviert und/oder eine Anzeigeeinheit ansteuert, über die die Auswertung sowie Anweisungen an den Nutzer für die zu ergreifenden Maßnahmen angezeigt werden.

10. Zentrifuge nach einem der vorangehenden Ansprüche, **dadurch gekennzeichnet, dass** zur Erkennung von Unwuchten in einem, auf die Zentrifuge bezogen, niedrigen Drehzahlbereich der Distanzsensor aktiv ist.

11. Zentrifuge nach einem der vorangehenden Ansprüche, **dadurch gekennzeichnet, dass** zur Erkennung von Unwuchten in einem, auf die Zentrifuge bezogen, hohen Drehzahlbereich der Beschleunigungssensor aktiv ist.

12. Verfahren zur Erfassung von Unwuchten unter Verwendung einer Vorrichtung nach einem der vorangehenden Ansprüche, **dadurch gekennzeichnet, dass** in Abhängigkeit von der fortlaufenden Umdrehung Messwerte der Sensoren ermittelt werden und aus den Messwerten ein Mittelwert gebildet und mit dem entsprechenden Wert der Kennlinie verglichen wird, wobei bei einem Mittelwert oberhalb der Kennlinie weitere Maßnahmen initiiert werden, wie Abschalten des Motors der Dreheinheit, reduzieren der Drehzahl des Rotors, Aktivieren von akustischen und/oder optischen Signalen und/oder Ausgabe von Informationen über eine Anzeigeeinheit und ähnliches.

13. Verfahren nach Anspruch 12, **dadurch gekennzeichnet, dass** aus den Messwerten der Winkel der Unwucht bezogen auf einen Nullpunkt des Rotors bestimmt wird.

14. Verfahren nach Anspruch 12 oder 13, **dadurch gekennzeichnet, dass** aus den Messwerten des Distanzsensors die Abweichung der Dreheinheit von der Mittellage bestimmt wird.

15. Verfahren nach einem der Ansprüche 12 bis 14, **dadurch gekennzeichnet, dass** die Steuer- und Auswerteeinheit die Signale des Distanzsensors und der Beschleunigungssensoren der jeweiligen Raumachsen gleichzeitig erhält, vorzugsweise die Signalübertragung für jeden Sensor über einen eigenen Signalkanal erfolgt.

16. Verfahren nach einem der Ansprüche 12 bis 15, **dadurch gekennzeichnet, dass** über eine Eingabe von Datensätzen einzelne Verfahrensschritte der Zentrifuge - z. B. Sedimentation, Separation - definiert werden, für die jeweils eine spezifische Behandlung beim Erkennen einer Unwucht festgelegt wird.

**Claims**

1. Centrifuge (10) having a rotor (12), a drive shaft (14) on which the rotor (12) is mounted, a motor (18) driving the rotor (12) via the drive shaft (14), a supporting unit (30) having damping elements (36) each of which comprises a spring axis (36a), which supporting unit (30) supports a rotational unit (19) which comprises the motor (18) together with the drive shaft (14) and the rotor (12), a sensor unit (82, 84) for detecting the speed, an acceleration sensor (88) for detecting imbalances of the rotational unit (19), a control and evaluation unit (90) which evaluates data of the sensors (80, 82, 88), **characterized in that** a distance sensor (80) is provided for detecting imbalances of the rotational unit (19) which rotates about a rotational axis (14a), said distance sensor (80) detecting changes in distance in an operative axis (36b), said operative axis (36b) being aligned relative to the rotational axis (14a) in such a way that - at least in a projection onto a plane which is parallel to the operative axis (36b) and extends through the rotational axis (14a) - the operative axis (36b) and the axis of rotation (14a) define an angle between them which is less than 90°, including 0°.

2. Centrifuge according to claim 1, **characterized in that** said operative axis (36b) of the distance sensor (80) is aligned in parallel to said spring axis (36a).

3. Centrifuge according to claim 1 or 2, **characterized in that** at least two acceleration sensors (88) are provided for determining imbalances in a space defined by three spatial axes (x, y, z) that are perpendicular to each other, each acceleration sensor (88) being effective in a spatial axis (x, y, z) different from that of the other acceleration sensor (88).

4. Centrifuge according to claim 3, **characterized in that** one of the spatial axes (x, y, z) in which an acceleration sensor is effective is the spatial axis in the vertical direction (z).

5. Centrifuge according to any one of the preceding claims, **characterized in that** the spring axis (36a) is aligned such that it intersects the rotational axis (14a).

6. Centrifuge according to any one of the preceding claims, **characterized in that** the operative axis (36b) and the spring axis (36a) are identical.

7. Centrifuge according to any one of the preceding claims, **characterized in that** a first characteristic is stored in the control and evaluation unit (90), which defines first limit values as a function of the speed for the amplitude detected by the acceleration sensor (88) and/or the distance sensor (80), which amplitude describes the imbalance of the rotational unit (19), preferably that the control and evaluation unit (90) stores a second characteristic, which defines second limit values as a function of the speed for the amplitude detected by the acceleration sensor (88) and/or the distance sensor (80), which amplitude describes the imbalance of the rotational unit (19).

8. Centrifuge according to claim 7, **characterized in that,** upon reaching the first limit value, the control and evaluation unit activates an acoustic and/or visual signal unit and/or controls a display unit which is used to display the evaluation result and instructions to the user for the measures to be taken.

9. Centrifuge according to claim 7 or 8, **characterized in that** the control and evaluation unit switches off the motor of the rotational unit and/or the centrifuge upon reaching the second limit value, in particular that the control and evaluation unit activates an acoustic and/or visual signal unit and/or controls a display unit which is used to display the evaluation result and instructions to the user for the measures to be taken.

10. Centrifuge according to any one of the preceding claims, **characterized in that** the distance sensor is active for the detection of imbalances in a low speed range related to the centrifuge.

11. Centrifuge according to any one of the preceding claims, **characterized in that** the acceleration sensor is active for the detection of imbalances in a high speed range related to the centrifuge.

12. Method for detecting imbalances using an apparatus according to any one of the preceding claims, **characterized in that** measured values of the sensors are determined as a function of the continuous rotation, and said measured values are used to form an average value which is compared with the corresponding value of the characteristic, with further measures being initiated when an average value is detected that is above the characteristic, such as switching off the motor of the rotational unit, reducing the rotational speed of the rotor, activating the acoustic and/or optical signals and/or outputting information on a display unit, and the like.

13. Method according to claim 12, **characterized in that** the angle of the imbalance relative to a zero point of the rotor is determined from the measured values.

14. Method according to claim 12 or 13, **characterized in that** the deviation of the rotational unit from its central position is determined from the values measured by the distance sensor.

**15.** Method according to any one of claims 12 to 14, **characterized in that** the control and evaluation unit receives the signals of the distance sensor and the acceleration sensors of the respective spatial axes simultaneously, preferably that the signal transmission for each sensor takes place via a separate signal channel.

**16.** Method according to any one of claims 12 to 15, **characterized in that** by entering data records, individual process steps of the centrifuge - e.g. sedimentation, separation - are defined for each of which a particular treatment is defined specified in the event that an imbalance is detected.

**Revendications**

**1.** Centrifugeuse (10) avec un rotor (12), un arbre d'entraînement (14) monté sur le rotor (12), un moteur (18) entraînant le rotor (12) au moyen de l'arbre d'entraînement (14), une unité de palier (30) avec des éléments amortisseurs (36) comprenant chacun un axe de ressort (36a), laquelle supporte une unité de rotation (19) comprenant le moteur (18) avec l'arbre d'entraînement (14) et le rotor (12), une unité de détection (82, 84) pour la saisie de la vitesse de rotation, un capteur d'accélération (88) pour la détection de défauts d'équilibrage de l'unité de rotation (19), une unité de commande et d'évaluation (90) analysant les données des (80, 82, 88), **caractérisée en ce qu'**un capteur de distance (80) est prévu pour la détection de défauts d'équilibrage de l'unité de rotation (19) rotative autour de l'axe de rotation (14a), ledit capteur de distance (80) détectant des variations de distance dans un axe d'action (36b), ledit axe d'action (36b) étant orienté par rapport à l'axe de rotation (14a) de telle manière qu'au moins dans une projection sur un plan parallèle à l'axe d'action (36b) traversant l'axe de rotation (14a), l'angle résultant entre l'axe d'action (36b) et l'axe de rotation (14a) est inférieur à 90° jusqu'à 0° inclus.

**2.** Centrifugeuse selon la revendication 1, **caractérisée en ce que** l'axe d'action (36b) du capteur de distance (80) est parallèle à l'axe de ressort (36a).

**3.** Centrifugeuse selon la revendication 1 ou 2, **caractérisée en ce qu'**au moins deux capteurs d'accélération (88) pour la détection de défauts d'équilibrage sont prévus dans un espace défini par trois axes spatiaux (x, y, z) perpendiculaires l'un à l'autre, chaque capteur d'accélération (88) étant actif dans un axe spatial (x, y, z) distinct de l'autre capteur d'accélération (88).

**4.** Centrifugeuse selon la revendication 3, **caractérisée en ce qu'**un des axes spatiaux (x, y, z), où est actif un capteur d'accélération, est l'axe spatial dans la direction verticale (z).

**5.** Centrifugeuse selon l'une des revendications précédentes, **caractérisée en ce que** l'axe de ressort (36a) est orienté de manière à couper l'axe de rotation (14a).

**6.** Centrifugeuse selon l'une des revendications précédentes, **caractérisée en ce que** l'axe d'action (36b) et l'axe de ressort (36a) sont identiques.

**7.** Centrifugeuse selon l'une des revendications précédentes, **caractérisée en ce qu'**une première courbe caractéristique est sauvegardée dans l'unité de commande et d'évaluation (90), laquelle forme des premières valeurs limites en fonction de la vitesse de rotation pour l'amplitude saisie par le capteur d'accélération (88) et/ou le capteur de distance (80) et décrivant le défaut d'équilibrage de l'unité de rotation (19), préférentiellement **en ce qu'**une deuxième courbe caractéristique est sauvegardée dans l'unité de commande et d'évaluation (90), laquelle forme des deuxièmes valeurs limites en fonction de la vitesse de rotation pour l'amplitude saisie par le capteur d'accélération (88) et/ou le capteur de distance (80) et décrivant le défaut d'équilibrage de l'unité de rotation (19).

**8.** Centrifugeuse selon la revendication 7, **caractérisée en ce que** lorsque la première valeur limite est atteinte, l'unité de commande et d'évaluation active une unité de signalisation acoustique et/ou optique et/ou commande une unité d'affichage, au moyen de laquelle sont affichées l'évaluation ainsi que des instructions à l'utilisateur relativement aux mesures à appliquer.

**9.** Centrifugeuse selon la revendication 7 ou 8, **caractérisée en ce que** lorsque la deuxième valeur limite est atteinte, l'unité de commande et d'évaluation arrête le moteur de l'unité de rotation et/ou la centrifugeuse, l'unité de commande et d'évaluation active en particulier une unité de signalisation acoustique et/ou optique et/ou commande une unité d'affichage, au moyen de laquelle sont affichées l'évaluation ainsi que des instructions à l'utilisateur relativement aux mesures à appliquer.

**10.** Centrifugeuse selon l'une des revendications précédentes, **caractérisée en ce que** le capteur de distance est activé pour la détection de défauts d'équilibrage dans une plage de vitesses de rotation peu élevées par rapport à la centrifugeuse.

**11.** Centrifugeuse selon l'une des revendications précédentes, **caractérisée en ce que** le capteur de distance est activé pour la détection de défauts d'équilibrage dans une plage de vitesses de rotation élevées par rapport à la centrifugeuse.

**12.** Procédé de détection de défauts d'équilibrage recourant à un dispositif selon l'une des revendications précédentes, **caractérisé en ce que** des valeurs de mesure des capteurs sont déterminées en fonction de la rotation continue, et **en ce qu'**une valeur moyenne est formée à partir des valeurs de mesure et comparée à la valeur correspondante de la courbe caractéristique, d'autres mesures étant appliquées en cas de valeur moyenne supérieure à la courbe caractéristique, telles que l'arrêt du moteur de l'unité de rotation, la réduction de la vitesse de rotation du rotor, l'activation de signaux acoustiques et/ou optiques et/ou l'émission d'informations au moyen d'une unité d'affichage, et mesures analogues.

**13.** Procédé selon la revendication 12, **caractérisé en ce que** l'angle du défaut d'équilibrage par rapport à un point neutre du rotor est déterminé à partir des valeurs de mesure.

**14.** Procédé selon la revendication 12 ou 13, **caractérisé en ce que** l'écart de l'unité de rotation par rapport à la position centrale est déterminé à partir des valeurs de mesure du capteur de distance.

**15.** Procédé selon l'une des revendications 12 à 14, **caractérisé en ce que** l'unité de commande et d'évaluation reçoit simultanément les signaux du capteur de distance et des capteurs d'accélération des axes spatiaux respectifs, la transmission de signaux pour chaque capteur étant préférentiellement via un canal de signaux propre.

**16.** Procédé selon l'une des revendications 12 à 15, **caractérisé en ce que** différentes étapes de procédé de la centrifugeuse - telles que sédimentation, séparation - pour lesquelles un traitement spécifique est fixé en cas de détection d'un défaut d'équilibrage, sont définies par entrée d'enregistrements de données.

Fig. 1

Fig. 1b

Fig. 1a

**Fig. 2**

**Fig. 3**

unterschritten

1. Kennlinie
erreicht

2. Kennlinie
erreicht

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19539633 A1